# EUROPÄISCHE PATENTSCHRIFT

(11) **EP 0 906 212 B1**
(45) Veröffentlichungstag und Bekanntmachung des Hinweises auf die Patenterteilung: **16.08.2001**
(21) Anmeldenummer: 97928257.1
(22) Anmeldetag: 20.06.1997
(51) Int. Cl.: B62B 1/12

(54) **TRANSPORTWAGEN**
HAND CART
CHARIOT TRANSPORTEUR

(30) Priorität: 22.06.1996 DE 19624985
(43) Veröffentlichungstag der Anmeldung: 07.04.1999
(73) Patentinhaber: Hailo-Werk Rudolf Loh GmbH & Co. KG, D-35708 Haiger-Flammersbach (DE)
(72) Erfinder: CHRIST, Hans-Dieter, D-57299 Burbach (DE); KELLER, Antje, D-35708 Haiger (DE); KLAAS, Jochen, D-35708 Haiger (DE); GAUBATZ, Martin, D-35686 Dillenburg (DE); MIES, Martin, D-57578 Elkenroth (DE); FERON, Jan, D-57072 Siegen (DE)
(74) Vertreter: Fritz, Edmund Lothar, Dipl.-Chem.
(86) Internationale Anmeldenummer: EP9703227
(87) Internationale Veröffentlichungsnummer: WO9749595

(56) Entgegenhaltungen:
- FR-A- 2 692 872
- US-A- 4 118 048
- US-A- 5 240 264
- US-A- 5 427 394
- US-A- 5 445 397

## Beschreibung

Die Erfindung betrifft einen Transportwagen nach dem Oberbegriff des Anspruchs 1.

Aus der US-A-52 40 264 ist ein Transportwagen der vorgenannten Art bekannt. Bei diesem Transportwagen verläuft die Bodenfläche des untersten Behälters waagerecht, so daß diese bei abgestelltem Transportwagen auf dem Boden aufliegt. Dies hat den Nachteil, daß die Unterseite des Behälters einem gewissen Verschleiß unterliegt und auch anfällig ist gegen Verschmutzung.

Demgegenüber besteht die Aufgabe der vorliegenden Erfindung darin, einen Transportwagen der eingangs genannten Gattung zur Verfügung zu stellen, der die vorgenannten Nachteile des bekannten Transportwagens nicht aufweist.

Die Lösung dieser Aufgabe liefert ein erfindungsgemäßer Transportwagen der eingangs genannten Gattung mit den kennzeichnenden Merkmalen des Hauptanspruchs. Erfindungsgemäß ist vorgesehen, daß sich die freien Enden der vertikal ausgerichteten Schenkel des Halte- oder Fahrbügels auf dem Boden abstützen können und daß die Innen-Bodenflächen der Behälter in Bezug auf die Schenkel nach unten zu leicht abfallen. Der erfindungsgemäße Transportwagen stützt sich somit nicht mit der Unterseite des untersten Behälters auf dem Boden ab sondern über die freien Enden der vertikal ausgerichteten Schenkel des Halte- oder Fahrbügels. Die Tatsache, daß die Innen-Bodenflächen der Behälter in Bezug auf die Schenkel nach unten zu leicht abfallen, hat außerdem den Vorteil, daß in die Behälter eingeworfene Gegenstände wie zum Beispiel Wäschestücke zum Endbereich (Grund) des Behälters hinrutschen. Dies erleichtert das Einwerfen weiterer Gegenstände in die Behälter und erhöht den praktischen Gebrauchswert des Transportwagens.

Die in den Unteransprüchen genannten Merkmale betreffen bevorzugte Weiterbildungen des erfindungsgemäßen Transportwagens.

Man erkennt, daß die Erfindung jedenfalls dann verwirklicht ist, wenn es sich um eine baukastenartig zusammenbaubare Transporteinrichtung (Handkarre mit einer Achse) handelt, die aus mehreren zusammenfügbaren Teilen besteht und nach Bedarf mit einem oder mehreren Behältern bestückt werden kann. Die Behälter und/oder das Gestell können separate Einheiten sein, die miteinander mittels Steckverbindungen betrieblich verbindbar sind. Dabei kann das Gestell Teil von den Behältern sein, das im oberen Bereich einen Bügel aufweist, während die restlichen Teile des Gestells als Vorsprünge und Ausnehmungen der Behälter ausgebildet sind, die gleichzeitig zur betrieblichen Verbindung der vertikal übereinander angeordneten Behälter dienen können. Der Bügel kann jedoch auch so ausgebildet sein, daß seine Schenkel alle Behälter mit entsprechenden Öffnungen in etwa durchqueren. Ferner können die Behälter Schließmittel in Form von angelenkten Klappen besitzen, die um horizontale oder vertikale Achsen verschwenkbar sind und in ihrer Öffnungsstellung in etwa waagerechte Positionen einnehmen können, so daß sie als Auflagen für Gebrauchsgegenstände dienen können. Diese Klappen sind vorzugsweise im Stirnbereich der Behälter angeordnet, sie können jedoch in bezug auf den Korpus des Transportwagens auch seitlich oder deckseitig angeordnet sein. Die regelmäßig gleichartig ausgebildeten Behälter sind dabei zum einen mit dem Gestell und zum anderen untereinander betrieblich (form- und/oder kraftschlüssig) verbindbar, so daß der Transportwagen eine kompakte und formstabile Einheit bildet.

Zwei Ausführungsbeispiele der Erfindung sind in der Zeichnung schematisch dargestellt und werden im folgenden näher erläutert. Es zeigen
- Fig. 1: einen Transportwagen in perspektivischer Seitenansicht,
- Fig. 2: den in Fig. 1 dargestellten Transportwagen mit einer geöffneten Tür und
- Fig. 3: einen Transportwagen mit zwei Behältern und in Explosionsdarstellung.

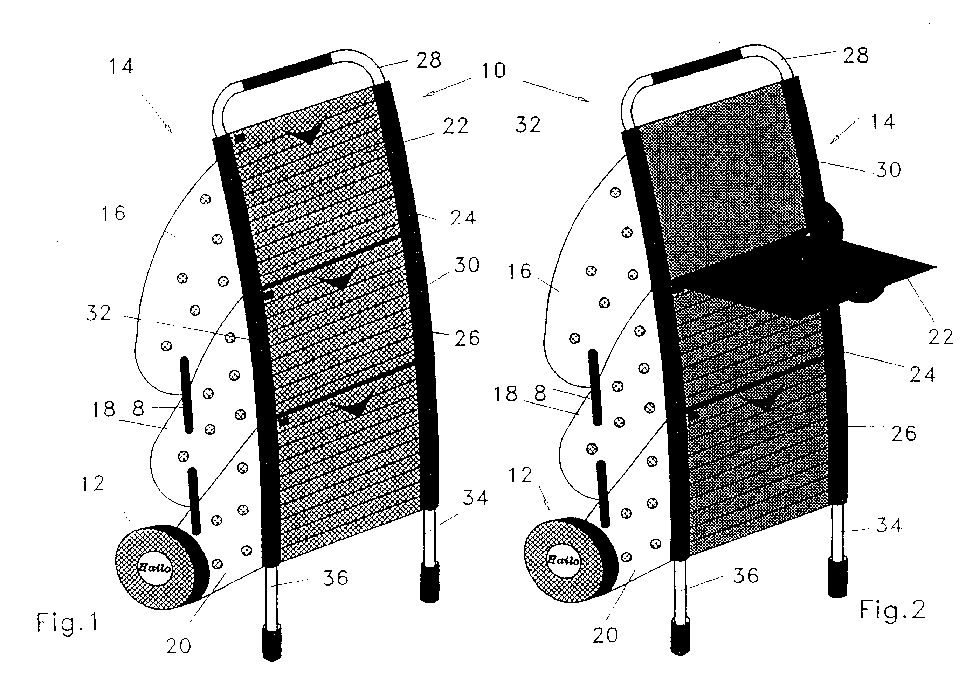

In den Fig. 1 und 2 ist ein Transportwagen 10 mit Rädern 12, einem Gestell 14 und mit drei Behältern 16, 18, 20 zur Aufnahme von Wäsche dargestellt. Die Behälter 16, 18, 20 sind übereinander angeordnet, bestehen aus formbeständigem Kunststoff und sind mit dem Gestell 14 betrieblich verbindbar. Jeder Behälter 16, 18, 20 weist jeweils ein Schließmittel 22, 24, 26, hier eine Klappe, auf, die in bezug auf die Bewegungsrichtung des Transportwagens 10 stirnseitig angeordnet sind. Wie Fig. 2 erkennen läßt, können diese Schließmittel 22, 24, 26 in ihrer Öffnungsstellung eine in etwa waagerechte Position einnehmen und dabei als Auflage dienen. Die einander benachbarten Behälter 16, 18, 20 sind miteinander und mit dem Gestell 14 kraftschlüssig verbindbar. Das Gestell 14 hat einen Halte- oder Fahrbügel 28 mit vertikal ausgerichteten Schenkeln 30, 32, deren freien Enden 34, 36 sich auf dem Boden abstützen können. Der dem Boden zugekehrte Behälter 20 trägt die Räder 12 und die Innen-Bodenflächen der Behälter 16, 18, 20 fallen in bezug auf die Schenkel 30, 32 nach unten zu leicht ab. Man erkennt, daß die Schenkel 30, 32 zur Stirnseite des Transportwagens 10 hin leicht gebogen sind.

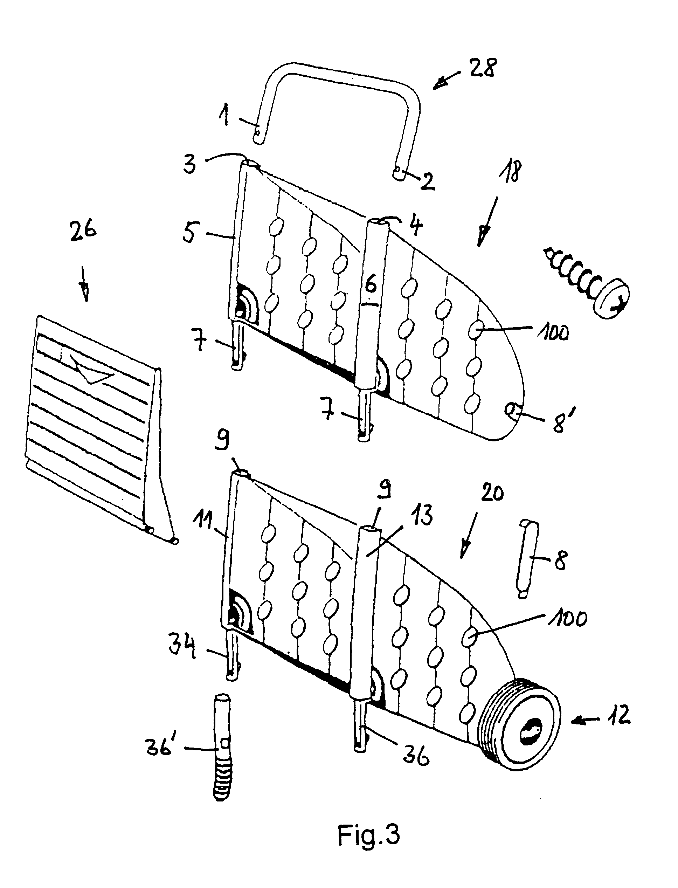

In Fig. 3 ist ein Transportwagen mit zwei Rädern 12 und zwei übereinander angeordneten Behältern 18 und 20 dargestellt. Man erkennt, daß das Gestell aus einem Bügel 28 mit Endstücken 1, 2 besteht, die in Rohröffnungen 3, 4 einsteckbar und mittels Schrauben arretierbar sind. Die Teile 5 und 6 sowie 11 und 13 sind Teile des Gestells und als Rohrstücke ausgebildet, bei denen im unteren Bereich Vorsprünge 7 bzw. die Füsse 34, 36 hervorstehen. Die Vorsprünge 7 sind in Öffnungen 9 einsteckbar und mit diesen form- und kraftschlüssig verbindbar. Der Benutzer kann daher entscheiden, ob er einen Transportwagen mit einem, zwei, drei oder mehreren Behältern 16, 18, 20 verwenden will. Um die Stabilität des Transportwagens zu erhöhen, sind hier Klemmkörper 8 vorgesehen, die in entsprechende Ausnehmungen 8' der Behälter einsteckbar sind. Die als Vorsprünge ausgebildeten Füße 34, 36 können mit einem Verkleidungsstück 36' versehen sein.

Zusammengefaßt kann festgestellt werden, daß es sich bei der Erfindung um ein Modularsystem handelt. Als Basiselemente dienen mindestens zwei, vorzugsweise drei gleichgroße, ineinander steckbare Behälter mit seitlich oder rundum angebrachten Entlüftungslöchern 100, wobei jeder Behälter etwa 20 bis 50 l Inhalt aufweist, also in etwa das Volumen einer Waschmaschinenfüllung. Die Behälter selbst sind übereinander angeordnet und lösbar miteinander verbindbar. Dies geschieht sicher und einfach mittels mitgelieferter Klemmkörper (Haltelaschen) 8, die seitlich in jeweils zwei Behälteröffnungen 8'geclipst, geschraubt oder auf andere Art befestigt werden können. Zur besseren Fixierung der Behälter übereinander sind im seitlichen Bereich der Einwurföffnung steckbare Dorne mit angespritzt. Zusätzlich besteht die Möglichkeit der Verschraubung an den Berührungsflächen der Behälter mittels Verbindungsschrauben. Der mit zwei oder drei Behältern 16, 18, 20 verbundene Sortierturm wird im oberen Bereich mittels des Halte- oder Fahrbügels 28 ebenso komplettiert, wie die beiden Stützrohre 34, 36, über die sich der Transportwagen auf dem Boden abstützt. Diese Teile werden gesteckt und zusätzlich mit Schrauben gesichert. Die Räder 12 werden so gewählt, daß eine Geländegängigkeit gewährleistet ist.

Je nach Einsatz der Vorrichtung können Schmutzwäsche in den jeweils gekennzeichneten Behälter gesammelt und gegen fremde Einblicke durch Verschließen der Öffnungsklappen geschützt werden. Eine Sortiereinrichtung dieser Art ermöglicht ebenso den Einsatz im Kinderzimmer, Hobbyraum, Vereinen usw.

## Patentansprüche

1. Transportwagen mit zwei Rädern, einem Gestell und
mindestens zwei oder mehreren übereinander angeordneten und mit dem Gestell betrieblich verbindbaren Behältern zur Aufnahme von Gegenständen, zum Beispiel Wäsche, Werkzeug oder dergleichen,
wobei die Behälter separate und mit dem Gestell individuell verbindbare Teile sind,
wobei das Gestell einen Halte- oder Fahrbügel mit vertikal ausgerichteten Schenkeln aufweist,
wobei der dem Boden zugekehrte Behälter die Räder trägt und wobei an dem Gestell eine bodenseitige Abstützung für den Transportwagen vorgesehen ist,
dadurch gekennzeichnet, daß die freien Enden (34, 36) der vertikal ausgerichteten Schenkel (30, 32) des Halte- oder Fahrbügels (28) sich auf dem Boden abstützen können,
daß die Innen-Bodenflächen der Behälter (16, 18, 20) in Bezug auf die Schenkel (30, 32) nach unten zu leicht abfallen.

2. Transportwagen nach Anspruch 1, dadurch gekennzeichnet, daß jeder Behälter (16, 18, 20) Schließmittel (22, 24, 26) in Form jeweils einer Klappe aufweist, die in eine Öffnungsstellung gebracht werden kann, in der sie eine etwa waagerechte Position einnimmt und dabei als Auflage dient.

3. Transportwagen nach Anspruch 1 oder 2, dadurch gekennzeichnet, daß zwei, vorzugsweise drei gleichgroße Behälter ineinandersteckbar sind über Rohrstücke (5, 6) an den Behältern, wobei Vorsprünge (7) im unteren Bereich des einen Behälters in Öffnungen (9) des darunterliegenden Behälters einsteckbar und mit diesem form- und kraftschlüssig verbindbar sind.

4. Transportwagen nach einem der Ansprüche 1 bis 3, dadurch gekennzeichnet, daß Klemmkörper (8) vorgesehen sind, die in entsprechende Ausnehmungen (8') der Behälter einsteckbar sind zur Erhöhung der Stabilität des Transportwagens.

5. Transportwagen nach einem der Ansprüche 1 bis 4, dadurch gekennzeichnet, daß die ineinandersteckbaren Behälter seitlich oder rundum angebrachte Entlüftungslöcher (100) aufweisen.

6. Transportwagen nach einem der Ansprüche 1 bis 5, dadurch gekennzeichnet, daß die Klemmkörper (8) Haltelaschen sind, die seitlich in jeweils zwei Behälteröffnungen (8') befestigt, vorzugsweise geclipst werden.

7. Transportwagen nach einem der Ansprüche 1 bis 6, dadurch gekennzeichnet, daß die Schenkel (30, 32) des Halte- oder Fahrbügels (28) zur Stirnseite des Transportwagens (10) hin leicht gebogen sind.

## Claims

1. Hand cart, having two wheels, a frame and at least two or more containers, which are disposed one above the other and are operatively connectable to the frame, for the accommodation of articles, for example washing, tools or the like, the containers being separate parts which are individually connectable to the frame, the frame having a retaining or travel handle provided with vertically orientated side-pieces, the container nearest the ground carrying the wheels, and the hand cart being supported on the frame at the end facing the ground, characterised in that the free ends (34, 36) of the vertically orientated side-pieces (30, 32) of the retaining or travel handle (28) can be supported on the ground, and in that the internal bottom surfaces of the containers (16, 18, 20) slope slightly downwardly relative to the side-pieces (30, 32).

2. Hand cart according to claim 1, characterised in that each container (16, 18, 20) has closing means (22, 24, 26) each in the form of a flap which can be brought into an open position in which it assumes a substantially horizontal position and thereby serves as a support.

3. Hand cart according to claim 1 or 2, characterised in that two, preferably three, containers of identical sizes can be fitted into one another via tubular portions (5, 6) on the containers, projection members (7) in the lower region of one container being able to be fitted into apertures (9) in the container situated therebeneath and are connectable to said container in a form- and force-fitting manner.

4. Hand cart according to one of claims 1 to 3, characterised in that clamping means (8) are provided, which can be fitted into corresponding recesses (8') in the containers to increase the stability of the hand cart.

5. Hand cart according to one of claims 1 to 4, characterised in that the containers, which can be fitted into one another, have ventilation holes (100) provided laterally or all-round.

6. Hand cart according to one of claims 1 to 5, characterised in that the clamping means (8) are retaining lugs which are each secured, preferably clipped, laterally in two container openings (8').

7. Hand cart according to one of claims 1 to 6, characterised in that the side-pieces (30, 32) of the retaining or travel handle (28) are curved slightly towards the end face of the hand cart (10).

## Revendications

1. Chariot de transport comportant deux roues, un châssis et au moins deux ou plusieurs récipients superposés et pouvant être reliés fonctionnellement au châssis, pour recevoir des objets, par exemple du linge à laver, un outil ou analogue,
dans lequel les récipients sont des parties séparées pouvant être reliés individuellement au châssis,
dans lequel le châssis possède un étrier de retenue ou de conduite comportant des branches dirigées verticalement, dans lequel le récipient tourné vers le fond porte les roues et dans lequel un appui côté sol pour le chariot de transport est prévu sur le châssis,
caractérisé en ce que les extrémités libres (34, 36) des branches orientées verticalement (30, 32) de l'étrier de retenue ou de conduite (28) peuvent prendre appui sur le sol,
que les surfaces intérieures de base des récipients (16, 18, 20) s'étendent légèrement vers le bas à partir des branches (30, 32).

2. Chariot de transport selon la revendication 1,
caractérisé en ce que chaque récipient (16, 18, 20) comprend des moyens de fermeture (22, 24, 26) se présentant respectivement sous la forme d'un volet qui peut être amené dans une position ouverte, dans laquelle il se situe dans une position approximativement horizontale et sert d'appui.

3. Chariot de transport selon la revendication 1 ou 2, caractérisé en ce que deux récipients, de préférence trois récipients, de même taille peuvent être emboîtés les uns dans les autres au moyen d'éléments tubulaires (5, 6) présents sur les récipients, des parties saillantes (7) situées à la partie inférieure d'un premier récipient pouvant être enfichées dans des ouvertures (9) du récipient sous-jacent, et pouvant être reliées à ce dernier selon une liaison par formes complémentaires et selon une liaison de force.

4. Chariot de transport selon l'une des revendications 1 à 3, caractérisé en ce que des corps de serrage (8) sont prévus, qui peuvent être enfichés dans des évidements correspondants (8') des récipients, pour accroître la stabilité du chariot de transport.

5. Chariot de transport selon l'une des revendications 1 à 4, caractérisé en ce que les récipients emboîtés les uns dans les autres possèdent des trous d'aération (100) disposés latéralement ou sur leur pourtour.

6. Chariot de transport selon l'une des revendications 1 à 5, caractérisé en ce que les corps de serrage (8) sont des pattes de retenue qui sont fixées, de préférence par encliquetage, latéralement dans deux ouvertures respectives (8') des récipients.

7. Chariot de transport selon l'une des revendications 1 à 6, caractérisé en ce que les branches (30, 32) de l'étrier de retenue ou de conduite (28) sont coudées légèrement en direction de la face avant du chariot de transport (10).
